# EUROPÄISCHE PATENTSCHRIFT

(11) **EP 2 102 881 B1**
(45) Veröffentlichungstag und Bekanntmachung des Hinweises auf die Patenterteilung: **25.05.2011**
(21) Anmeldenummer: 07819853.8
(22) Anmeldetag: 17.11.2007
(51) Int. Cl.: H01H 35/14, G01P 15/135

(54) **KUGELSCHALTER IN EINER MULTI-KUGELSCHALTER-ANORDNUNG**
BALL SWITCH IN A MULTIBALL SWITCH ARRANGEMENT
INTERRUPTEUR SPHÉRIQUE DANS UN DISPOSITIF À INTERRUPTEURS SPHÉRIQUES MULTIPLES

(30) Priorität: 12.12.2006 DE 102006058473
(43) Veröffentlichungstag der Anmeldung: 23.09.2009
(73) Patentinhaber: Karlsruher Institut für Technologie, 76131 Karlsruhe (DE)
(72) Erfinder: BLANK, Thomas, 76187 Karlsruhe (DE)
(74) Vertreter: Gärtner, Stephan
(86) Internationale Anmeldenummer: PCT/EP2007/009966
(87) Internationale Veröffentlichungsnummer: WO 2008/071289

(56) Entgegenhaltungen:
- EP-A- 1 335 183
- DE-C1- 10 158 416

## Beschreibung

Die Erfindung betrifft den Aufbau eines Kugelschalters in einer Multi-Kugelschalter-Anordnung.

Ein solcher Kugelschalter in einer Multi-Kugelschalter-Anordnung in Schicht-/Plattenbauweise, besteht aus einer ersten Platte aus Kunststoff, der Bodenplatte, auf der zentral eine Kreisscheibe aus elektrisch leitendem Material angeordnet ist. Von der Kreisscheibe führt eine elektrische Kontaktbahn weg und endet am Rand des Gebiets des Kugelschalters auf der der Kreisscheibe gegenüber liegenden Seite der Bodenplatte. Eine zweite, auf der Bodenplatte liegende Platte aus Kunststoff, die Kammerplatte, hat entsprechend der Anordnung der Kreisscheiben auf der ersten Platte eine durchgehende Bohrung, die Kammer, mit elektrisch leitender, metallischer Innenwand, deren Kammerlängsachse durch den Mittelpunkt der zugeordneten Kreisscheibe geht. Von der metallischen Innenwand auf mindestens einer Kammerplattenseite geht eine Kontaktbahn nach außen weg. Auf der Seite der Kontaktfahne zur Kreisscheibe, gegenüber liegend zu derselben, endet diese Kontaktbahn. In der Kammer befindet sich eine elektrisch leitende Kugel, deren Durchmesser kleiner als der der Kammer und deren Höhe ist, jedoch so groß ist, das keine zweite solche Kugel in der Kammer vollständig einliegen kann.

In der deutschen Patentschrift Nr. 6713 28 wird ein Fliehkraftkugelschalter beschrieben, bei dem die Kugel unter dem Einfluss ihrer eigenen Fliehkraft ungehindert rollt und den notwendigen Kontaktdruck herbeiführt, indem die die Kugel haltenden beweglichen Teile beim Schließen des Schalters, z. B. durch Nasen, aufgehalten werden.

In der DE 39 21 926 C1 wird ein elektrischer Schalter für bewegliche Geräte oder Geräteteile vorgestellt, der lage- und/oder bewegungsabhängig selbsttätig schaltet. Der Schalter besteht aus einem Gehäuse aus isolierendem Material, in dem nach außen ragende elektrische Kontakte fest angeordnet sind. Im Innern ist ein darin frei beweglicher Kontaktkörper aus elektrisch leitendem Material angeordnet, der mit den festen Kontakten schließend bzw. öffnend kooperiert. Der bewegliche Kontaktkörper ist eine Kugel; die festen Kontakte sind parallel oder im Wesentlichen parallel angeordnete metallische Kontaktstifte. Es können jeweils zwei Kontaktstifte durch die entsprechende Lage der Kugel elektrisch überbrückt werden.

Eine Kontaktanordnung für Dreh- und Schiebeschalter wird in der DE 103 53 438 A1 beschrieben. Ein federndes Kontaktteil übernimmt sowohl die Rast- als auch Kontaktfunktion. Das Kontaktteil ist z. B. eine abgefederte Kugel, die in Bohrungen einer Leiterplatte rastet, deren Bohrungsränder mit sektionierten Leiterbahnen versehen sind, wobei die leitfähige Kugel die Sektionen miteinander verbindet.

Ein Kugelschalter zur signalmäßigen Kennzeichnung von auswählbaren Neigungsrichtungen einer Basisebene wird in der DE 91 06 217 U beschrieben. Die Endlagerstellen der Schaltkugel sind kreisförmige Lagerstellen, die aus sich verjüngenden Vertiefungen in einer auf der Basiswand stehenden Seitenwand des Innenraums bestehen. Sie sind so bemessen, dass deren Symmetrieachse die auf der zugehörigen Ecke des Basispolygons auflaufende Schaltkugel unmittelbar oberhalb deren Mittelpunkt durchläuft. Jede Vertiefung ist über eine in den Grund der Vertiefung mündende Bohrung mit einer nur dieser Vertiefung zugeordneten lichtdichten Kammer verbunden, in der eines der Lichtsendeelemente oder der Lichtempfängerelemente angeordnet ist.

Ein Bewegungssensor besteht nach der US 5,410,113 aus zwei Substraten, Kontaktmittel und wenigstens einem elektrisch leitfähigen Element. Das erste Substrat hat eine auf seiner Hauptseite exponierte, elektrisch leitfähige Schicht. Das zweite Substrat hat ein Durchgangsloch von einer Hauptseite zur andern. Das erste und zweite Substrat liegen hauptseitig derart aneinander, dass die Kontaktfläche auf dem ersten Substrat innerhalb der Stirn der Durchgangsbohrung zum Erscheinen kommt. Das in dem Durchgangsloch gefasste, frei bewegliche Element kann die leitfähige Schicht auf dem ersten Substrat mit Kontaktmitteln an der Innenwand der Bohrung elektrisch überbrücken.

In der US 5,987,988 wird ein Beschleunigungssensor beschrieben, der aus einer Hohlzylinderkammer mit inwändig rohrförmiger Kontaktfläche besteht. Diese Hohlzylinderkammer hat eine Boden und Deckplatte. In dieser Anordnung ist eine elektrisch leitende Kugel eingeschlossen, die bei ruhender Lage oder gleichförmiger Bewegung der Kammer eine stabile Lage durch eine zentrale Vertiefung in der Bodenfläche einnimmt. Die zentrale Vertiefung und eine anschließende Ringfläche, die die rohrförmige Kontaktfläche nicht berührt, werden bei hinreichender Beschleunigung durch die eingeschlossene Kugel während anhaltend starker Beschleunigung überbrückt, weil die Kugel während einer solchen Phase aus ihrer Ruhelage ausgelenkt wird.

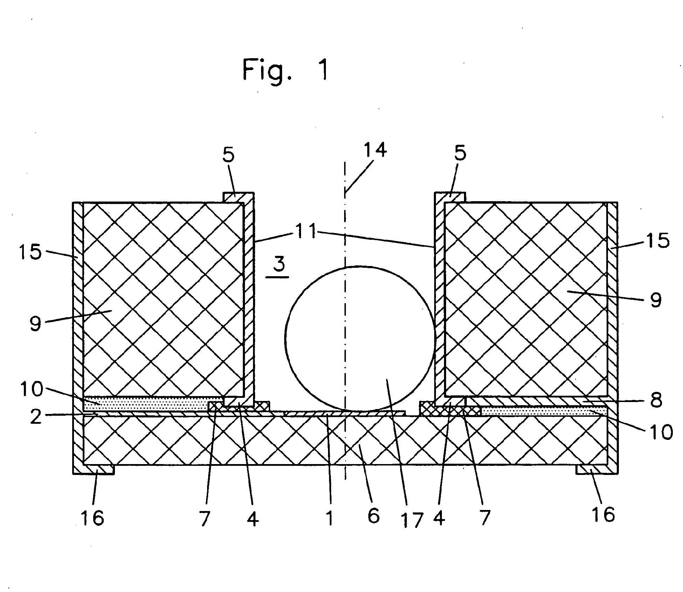

In der DE 101 58 416 C1 und EP 1 316 981 A1 ist eine Kugelschalteranordnung beschrieben, die aus mehreren Platten in Schicht- oder Stapelbauweise aufgebaut ist. Auf einer ersten Platte, der Außenplatte, befinden sich gleichartige Kreisscheiben aus elektrisch leitendem Material. Von diesen Kreisscheiben geht jeweils eine Kontaktfahne radial nach außen zum Rand des damit gebildeten Kugelschalters. Über diese Kontaktfahne und mittels einer galvanisch durchkontaktierten Bohrung wird die Kreisscheibe elektrisch mit Lötpads verbunden, die sich auf der Unterseite der Leiterplatte befinden. (Siehe hierzu die Zeichnung mit den Figuren 1 bis 10 darin.) Die Kreisscheibe ist über eine galvanisierte Bohrung elektrisch an die Kontaktbahn angebunden. Die Kontaktbahn befindet sich in einer anderen Ebene wie die Kreisscheibe, um die elektrische Isolierung zwischen Kammer und Kontaktbahn herzustellen.

Aus den Ansprüche 2 bis 4 und zugehöriger Beschreibung darin ist eine dritte Platte, eine weitere Außenplatte in weiter spezifizierter Bauweise beschrieben, die die Multi-Kugelschalter-Anordnung abdeckt. Dieser Aufbau ist aufwendig, da die Platte, die die Kreisscheibe trägt, aus zwei Platten aufgebaut ist. Die beiden Platten werden nach der nasschemischen Strukturierung der Kontaktbahn und der Kreisscheibe zusammen laminiert und über eine galvanisch beschichtete Bohrung miteinander elektrisch verbunden. Ein solcher Aufbau ist verfahrenstechnisch aufwendig.

Der Erfindung liegt die Aufgabe zugrunde, die Kugelschalter einer Multi-Kugelschalter-Anordnung derart zu gestalten, dass mit wenigen verfahrenstechnischen Schritten eine Multi-Kugelschalter-Anordnung aus mindestens zwei Kunststoffplatinen, einer Bodenplatine und einer Kammerplatine, hergestellt werden können, bei denen die Kugelschalter aus Kreisfläche mit wegführender Kontaktbahn und davon elektrisch isolierter Kammerwand in ihrer bekannten Struktur vorliegen. Eine dritte Platine, die Deckplatine, kann die Multi-Kugelschalter-Anordnung bei Bedarf abdecken.

Die Aufgabe wird durch den in Anspruch 1 kennzeichnend beschriebenen Aufbau eines solchen Kugelschalters gelöst, wobei die Kugelschalter strukturiert und ausgerichtet auf den beteiligten Platinen angeordnet sind. Die Kreisscheibe und die davon weg zur Außenseite des Kugelschalters führende Kontaktbahn liegen in einer Ebene auf einer Seite einer Kunststoffplatine, der Bodenplatine, in die über phototechnische Strukturierung und nasschemisches Ätzen die Leiterbereiche aufgebracht sind. Darauf ist jeder Kugelschalter mit seiner Bodenplatte angeordnet. Die Kugelschalter reihen sich, wie in der DE 101 58 416 C1 beschrieben, aneinander.

Die metallische Innenwand der Kammer in der zweiten Platte, der Kammerplatte, endet auf beiden Seiten der Kammerplatte als Kreisringstreifen. Die Kammern sind durchgehende Bohrungen in der Kammerplatine. Bei vorgesehen zusammengelegter Boden- und Kammerplatine sitzen jeweils eine Kreisscheibe und eine Kammer konzentrisch und elektrisch voneinander isoliert zueinander.

Die Kreisscheibe auf der Bodenplatte des Kugelschalters umgibt ein konzentrischer Ring aus dielektrischem Material, der Dichtring, auf dem der auf der Kammerplatte gegenüberliegende metallische Kreisringstreifen konzentrisch vollständig aufliegt.

Die Bodenplatte und die Kammerplatte sind über eine die Kreisscheibe umgebende, bis zum Bodenplattenrand reichende Klebeschicht miteinander verbunden/verpresst. Die Kammerwand ist von der Kreisscheibe und der wegführenden Leiterbahn dadurch elektrisch isoliert. Zwischen dem Kreisringstreifen der Kammer und der Bodenplatte besteht über den dazwischen liegenden Dichtring eine Dichtungsfunktion. Die Kammerplatte und die Bodenplatte bilden so einen Becher, in dem die Kugel unter stetem Kontakt mit der Kreisscheibe gefasst ist und sich darin bewegen kann, sofern sich der Becher nur senkrecht zur Kammerachse bewegt.

Weitere nützliche und vorteilhafte Ausgestaltungen sind in den Unteransprüchen beschrieben.

Wäre sicher, dass sich der Kugelschalter mit seiner Kammerachse stets senkrecht zur Erdanziehung steht, die Becheröffnung nur nach oben weist und die Bewegung des Kugelschalters nur senkrecht zur Kammerachse ist, wäre eine Deckplatte bzw. eine Deckplatine auf die freie Seite der Kammerplatte bzw. Kammerplatine nicht notwendig.

Damit die Kugel in ihrem Becher sicher gefangen ist, ist die Kammerplatte bzw. Kammerplatine mit einer dritten Platte, der Deckplatte, bzw. Deckplatine aus Kunststoff abgedeckt. Die Deckplatte weist eventuell keine Struktur auf, ist also eben oder nur einen zum gegenüberliegenden Kreisringstreifen der Kammer konzentrischen Dichtring, wenn von ihr keine elektrische sondern nur eine Verschlussfunktion verlangt wird. Sie kann aber bei einer verlangten elektrischen Funktion wie die Bodenplatte strukturiert sein, ist also spiegelbildlich z. B. zur Bodenplatte aufgebaut (Anspruch 2). Eine weitere, elektrisch funktionslose Abdeckung ist, dass einfach die Kammer über einen Deckel mit mindestens Kammerdurchmesser mit dazwischen liegendem Dichtring zugedeckt ist. Die Kugel liegt dann hermetisch verschlossen ein und der Kugelschalter bzw. die daraus aufgebaute Multi-Kugelschalter-Anordnung kann willkürlich bewegt werden, ist aber auch gegen verschmutzte Atmosphären geschützt und behält dadurch ein langzeitliche konstantes Schaltverhalten.

Der Durchmesser D_{Kr} der Kreisscheibe ist aus folgendem Bereich, soll die Kugel im Falle der Berührung in jeder momentanen Kugelposition sicher berühren:
D_{Ka} - D_{Ku} < D_{Kr} < D_{Ka},
wobei D_{Ka} der Kammerdurchmesser und D_{Ku} der Kugeldurchmesser ist. Für die Massenherstellung des Kugelschalters wird der Kugeldurchmesser D_{Ku} demnach größer als die Durchmesserdifferenz D_{Ka} - D_{Ku} sein.

Entlang zwei einander gegenüberliegender Seiten des Kugelschalters, die parallel zur Kammerlängsachse liegen und an denen die Kontaktbahn von der Kreisscheibe bzw. der Kammerinnenwand endet, verläuft durchgehend je eine halbrohrförmige, elektrisch leitende Kontaktbahn in der die Kontaktbahn von der Kreisscheibe bzw. der Kammerinnnewand endet. In den Platinen, die die Multi-Kugelschalter-Anordnung bilden, sind das dann durchgehende Bohrungen.

Egal welcher Atmosphäre die in der Kammer exponierten Oberflächen und die Kugeloberfläche ausgesetzt sind, die Oberflächen müssen aus gegenüber der Kammeratmosphäre inertem Material sein, ob in elektrisch leitenden Bereichen oder in elektrisch nicht leitenden Bereichen. Dabei kann die eingeschlossene Kugel aus einem beliebigen Material sein, sofern die Kugeloberfläche die Forderung der atmosphäereninerten, elektrisch leitenden Oberfläche erfüllt, sie kann auch massiv aus elektrisch leitendem Material sein, gegebenenfalls mit vergüteter Oberfläche. Für die Kreisscheibe mit abgehender Leiterbahn am Kugelschalterboden und eventuell am Kugelschalterdeckel gilt, dass sie aus metallischem Material ist und mit der in die Kammer exponierten Leiteroberfläche zumindest diese atmosphäreninerte Forderung erfüllt. Dieser Aufbau des Kugelschalters mit den eben von den Kontaktflächen zum Rand abgehenden Kontaktbahnen lässt die Fertigung mit Siebdruck- und Galvanotechnik zu, womit gegenüber dem aufgezeigten Stand der Technik Senkrechtkontaktierungen in den Kugelschalterplatten entfallen. Fertigungstechnisch ein bedeutsamer und damit ein wirtschaftlicher Vorteil.

Im Folgenden wird das Beispiel eines solchen miniaturisierten Kugelschalters mit zwei Figuren vorgestellt. Die Zusammensetzung zur Multi-Kugelschalter-Anordnung ist in der DE 101 58 416 C1 ausführlich beschrieben.

Es zeigt:
Figur 1 den nicht abgedeckten Kugelschalter,
Figur 2 eine Kugelschalterabdeckung mit elektrischer Funktion.

In Figur 1 ist der Kugelschalter in seiner einfachsten, der offenen Form durch einen Zentralschnitt dargestellt. Auf der oberen Seite der Bodenplatte 6 sind über phototechnische Strukturierung Und nasschemische Ätzung die zentrale Kontaktfläche der Kreisscheibe 1 und die davon eben zum linken Kugelschalterrand verlaufende Kontaktbahn 2 zu sehen. Konzentrisch zur Kreisscheibe 1 sitzt unter Ringspaltbildung im kontaktfahnenfreien Bereich der Dichtring 7 zur elektrischen Isolierung gegen die elektrisch leitende Kammerwand 11. Die Bodenplatte 6 wird außerhalb des Dichtrings 7 mit einem Kleber 10 bestrichen und die Kammerplatte 9 draufgesetzt, bzw. mit der Bodenplatte 6 verpresst, dass die Kreisscheibenfläche 1 auf der Bodenplatte 6 und die Kammer 3 konzentrisch, zumindest nahezu konzentrisch derart sitzen, dass der Kreisringstreifen 4 umlaufend durchgehend aufliegt. Der Dichtring 7 ist in seiner Breite so dimensioniert, dass der auf die Kammerplattenseite gezogene metallische Kreisringstreifen 4 der Kammerinnenwand auch bei tolerabler Exzentrizität von Kreisscheibe zur Kammer noch durchgehend auf demselben aufsitzt. Von diesem Kreisringstreifen 4 geht in die zur Kontaktbahn 2 von der Kreisscheibe 1 entgegen gesetzten Richtung die Kontaktbahn 8 eben zum entgegen gesetzten Rand der Kammerplatte 9. Beide Kontaktbahnen 2 und 8 gehen jeweils elektrisch leitend über in die durchgehende Halbrohrkontaktbahn 15, einmal für den Kreisscheibenkontakt und zum andern für den Kammerinnenwandkontakt. Beide Halbrohrkontaktbahnen 15 knicken auf die Unterseite der Bodenplatte um und enden jeweils in einem Lötpad 16 für den Kugelschalteranschluss.

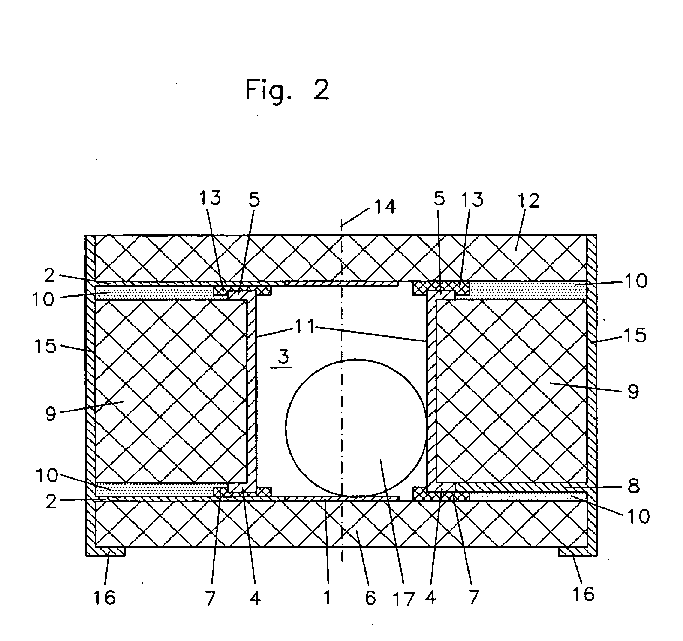

Figur 2 zeigt die Situation von Figur 1, jedoch erweitert um die Deckplatte 12. Durch diese Deckplatte 12 ist die Kugel 17 hermetisch in der Kammer 3 des Kugelschalters eingeschlossen. Für Figur 2 wurde die Variante aus Anspruch 2 gewählt, die die zur Bodenplatte 6 spiegelbildliche Deckplatte 12. Somit hat die Deckplatte 12 neben der hermetischen Abdeckung noch eine elektrische Funktion. Zur vollständigen Schalterfunktion muß zumindest die Kontaktbahn 2 von der Kreisscheibe 1 an der Deckplatte 12 heraus geführt sein. Die herausgeführte Kontaktbahn von der Kammerwand 11 kann oben bei der Deckplatte entfallen, es genügt die herausgezogene Kontaktbahn 8 bei der Bodenplatte 6. Dieser verschlossene Kammeraufbau ist symmetrisch zur Mittenlinie des Kugelschalters. In dem dargestellten Fall kontaktiert die Kontaktbahn 2 an der Deckplatte 12 die linke Halbrohrkontaktbahn 15, die längs des Kugelschalters durchgehend ist. Der Kugelschalter ist im geschlossenen Zustand, wenn die Kugel 17 oben oder unten überbrückt. Wäre die linke Halbrohrkontaktbahn 15 beispielsweisemittig durchtrennt, könnte durch überbrücken durch die Kugel 17 oben oder unten eine Lage oder eine Beschleunigungsrichtung des Kugelschalters angedeutet werden.

In diesem Ausführungsbeispiel für den Kugelschalter sind die beiden Platten, Boden- und Kammerplatte, bzw. Platinen, Boden- und Kammerplatinen glasfaserverstärktes Leiterplatinenmaterial. Kontaktflächen sind beispielsweise aus Kupfer, wobei exponierte Flächenbereiche eventuell noch atmosphäreninert vergütet sind. Nach dem Aufbringen der Strukturen für die Multi-Kugelschalter-Anordnung auf den jeweiligen 2 bzw. 3 Platinen werden diese zu der Multi-Kugelschalter-Anordnung zusammengesetzt/-gepresst und dann die Durch-und-durch-Bohrungen für die Halbrohrkontaktbahnen 15 unmittelbar benachbarter Kugelschalter eingebracht und die Wand der Bohrungen anschließend mit Verbindung zu den jeweiligen Lötpads 16 galvanisiert werden.

Die Baugröße des Kugelschalters ist im Wesentlichen nur fertigungstechnisch begrenzt, d. h. neben der phototechnischen Strukturierung und dem nasschemischen Ätzen kommen feinmechanische bzw. mechanische Fertigungsschritte, wie Bohren, zur Anwendung.

### Bezugszeichenliste

- 1.: Kreisscheibe
- 2.: Kontaktbahn
- 3.: Kammer
- 4.: Kreisringstreifen
- 5.: Kreisringstreifen
- 6.: Bodenplatte
- 7.: Dichtungsring
- 8.: Kontaktbahn
- 9.: Kammerplatte
- 10.: Klebeschicht
- 11.: Kammerwand
- 12.: Deckplatte
- 13.: Dichtungsring
- 14.: Kammerachse
- 15.: Kontaktfläche
- 16.: Lötpad
- 17.: Kugel

## Patentansprüche

1. Kugelschalter in einer Multi-Kugelschalter-Anordnung in Schicht-/Plattenbauweise, bestehend aus:
einer ersten Kunststoffplatte, einer Bodenplatte (6), auf der zentral eine metallische Kreisscheibe (1) angeordnet ist, von der eine erste elektrische Kontaktbahn (2) zum Rand der Bodenplatte führt,
einer zweiten, auf der Bodenplatte sitzenden Kunststoffplatte,
einer Kammerplatte (9), die entsprechend der Anordnung der *metallischen* Kreisscheibe auf der ersten Platte eine durchgehende Bohrung, eine Kammer (3), mit einer metallischen Innenwand (11) hat, die konzentrisch zur Kreisscheibe auf der Bodenplatte liegt, von der auf mindestens einer Kammerplattenseite eine zweite Kontaktbahn (8) zu einem Rand der Kammerplatte geht, wobei dieser Kammerplattenrand dem Bodenplattenrand mit der ersten Kontaktbahn (2) gegenüber liegt,
einer elektrisch leitenden Kugel (17) in der Bohrung, deren Durchmesser kleiner als der der Kammer und deren Höhe ist, jedoch so groß ist, das keine zweite solche Kugel in der Kammer vollständig einliegen kann,
**dadurch gekennzeichnet, dass**:
die *metallische* Kreisscheibe (1) und die davon weg zur Außenseite des Kugelschalters führende erste Kontaktbahn (2) in einer Ebene liegen,
die metallische Innenwand der Kammer (3) auf beiden Seiten der Kammerplatte als metallischer Kreisringstreifen (4), (5) endet,
die Kreisscheibe (1) auf der Bodenplatte (6) ein konzentrischer Ring (7) aus elektrisch nicht leitendem, elastischem Material,
einen ersten Dichtring (7), umgibt, auf dem der auf der Kammerplatte (9) gegenüberliegende Kreisringstreifen (4) umlaufend durchgehend aufliegt,
die Bodenplatte (6) und die Kammerplatte (9) über eine die Kreisscheibe (1) umgebende Klebeschicht (10) miteinander verpresst sind, so dass die Kammerwand (11) von der Kreisscheibe (1) mit wegführender ersten Kontaktbahn (2) elektrisch isoliert ist und zwischen dem Kreisringstreifen (4) der Kammer (3) und der Bodenplatte (6) über den dazwischen liegenden Dichtring (7) eine Dichtungsfunktion vorliegt.

2. Kugelschalter nach Anspruch 1, **dadurch gekennzeichnet, dass**: die Kammer (3) nach oben offen ist oder zum Verschluss der einliegenden Kugel (17) mit einer dritten Kunststoffplatte (12), der Deckplatte(12), abgedeckt ist,
die auf der der Kammer (3) zugewandten Seite keine Struktur hat, eben ist
oder
auf der Deckplatte (12) ein zweiter, zur Kammer (3) konzentrischer Dichtring (13) wie auf der Bodenplatte (6) sitzt, auf dem der auf der Kammerplatte (9) gegenüberliegende Kreisringstreifen (5) umlaufend durchgehend aufliegt,
oder
eine zur Bodenplatte (6) spiegelbildlich strukturierte Deckplatte (12) auf der Kammerplatte (9) aufliegt,
oder
die Kammer (3) über eine Kreisscheibe mit dazwischen liegendem Dichtring verschlossen ist.

3. Kugelschalter nach Anspruch 1 oder 2, **dadurch gekennzeichnet, dass** parallel zur Kammerlängsachse (14) auf der Seite der endenden ersten Kontaktbahn (2) von der Kreisscheibe (1) her und auf der Seite von der Kammerinnenwand (11) her je eine durchgehende halbrohrförmige, elektrisch leitende Kontaktfläche (15) besteht, die zumindest auf der unteren Bodenplattenseite in einem Lötpad (16) für den externen Kugelschalteranschluss endet.

4. Kugelschalter nach Anspruch 3, **dadurch gekennzeichnet, dass** zumindest die in der Kammer (3) exponierten Oberflächen und die Kugeloberfläche mit gegenüber der Kammeratmosphäre inertem Material vergütet sind.

## Claims

1. A ball switch in a multi-ball switch arrangement in a layered/laminated construction, the ball switch consisting of:
a first plastic plate, a base plate (6) on which a metallic circular disk (1) is centrally disposed from which a first electric contact track (2) extends to the edge of the base plate, a second plastic plate resting on the base plate, a chamber plate (9) having a through-bore on the first plate according to the arrangement of the metallic circular disk, a chamber (3) having a metallic inner wall resting concentrically to the circular disk on the base plate, from which a second contact track (8) extends to an edge of the chamber plate on at least one side of the chamber plate, this chamber plate edge being opposite to the base plate edge with the first contact track (2), an electrically conductive ball (17) in the bore, the diameter of which is smaller than that of the chamber and the height thereof, however, which is so large that no second such ball can be completely fitted into the chamber,
**characterized in that**:
the metallic circular disk (1) and the contact track (2) leading away therefrom to the outside of the ball switch are co-planar,
the metallic inner wall of the chamber (3) ends as a metallic annular strip (4), (5) on both sides of the chamber plate,
the circular disk (1) on the base plate (6) is surrounded by a concentric ring (7) made from an electrically non-conductive, elastic material, a first sealing ring (7), on which the annular strip (1) lying opposite on the chamber plate (9) rests continuously circumferentially,
the base plate (6) and the chamber plate (9) are pressed together via an adhesive layer surrounding the circular disk (1) in such a way that the chamber wall (11) is electrically insulated from the circular disk (1) and the outgoing first contact track (2), and between the annular strip (4) of the chamber (3) and the base plate (6) a sealing function exists across the intermediate sealing ring (7).

2. Ball switch according to claim 1, **characterized in that**: the chamber (3) which opens upwards or covered by a third plastic plate (12), the cover plate (12), for closing the fitted ball (17), which has no structure on the side facing the chamber (3), is planar or a second sealing ring (13) concentric with respect to the chamber (3) rests on the cover plate (12) like on the base plate (6) on which the annular strip (5) lying opposite on the chamber plate (9) rests circumferentially continuously or a cover plate (12) structured so as to be mirrored-inverted relative to the base plate (6) rests on the chamber plate (9) or the chamber (3) is closed by a circular disk and an intermediate sealing ring.

3. Ball switch according to claim 1 or 2, **characterized in that** parallel to a longitudinal axis (14) of the chamber at the side of the ending contact track (2) from the circular disk (1) and on the side from the chamber inner wall (11) a respective continuous semi-tubular, electrically conductive contact surface (15) exists which ends at least on the bottom side of the base plate in a soldering pad (16) for the external ball switch connection.

4. Ball switch according to claim 3, **characterized in that** at least the surfaces exposed in the chamber (3) and the ball surface are heat-treated with material that is inert to the chamber atmosphere.

## Revendications

1. Interrupteur à bille d'un dispositif à interrupteurs à bille, multiples, en construction étagée/construction à plaques, comprenant :
- une première plaque de matière plastique formant une plaque de fond (6) portant un disque circulaire métallique (1), central, relié à un premier chemin de contact électrique (2) conduisant au bord de la plaque de fond,
- une seconde plaque de matière plastique appuyée sur la plaque de fond formant une plaque de chambre (9) qui, en correspondance avec le montage du disque circulaire métallique sur la première plaque, comporte un perçage traversant,
- une chambre (3) avec une paroi intérieure métallique (11) concentrique au disque circulaire sur la plaque de fond, et un côté de la plaque de la chambre est relié à un second chemin de contact (8) conduisant au bord de la plaque de chambre,
- ce bord de la plaque de chambre est en regard du bord de la plaque de fond avec le premier chemin de contact (2),
- une bille (17) électroconductrice logée dans le perçage et dont le diamètre est plus petit que celui de la chambre et de sa hauteur, en étant toutefois suffisamment grand pour qu'aucune autre telle bille ne puisse se loger complètement dans la chambre,
interrupteur à bille **caractérisé en ce que**
- le disque circulaire métallique (1) et le premier chemin de contact (2) reliant ce disque au côté extérieur de l'interrupteur à bille, se situent dans un plan,
- la paroi intérieure métallique de la chambre (3) se termine des deux côtés de la plaque de chambre sous la forme de collerettes circulaires métalliques (4, 5),
- le disque circulaire (1) sur la plaque de fond (6) est entouré par un anneau concentrique (7) en une matière élastique non électroconductrice formant une première bague d'étanchéité (7) sur laquelle s'appuie la collerette circulaire (4), du côté opposé de la plaque de chambre (9),
- la plaque de fond (6) et la plaque de chambre (9) sont pressées l'une contre l'autre par une couche de colle (10) entourant le disque circulaire (1) pour que la paroi de la chambre (11) soit isolée du disque circulaire (1) dont est issu le premier chemin de contact (2), et entre la collerette circulaire (4) de la chambre (3) et la plaque de fond (6), le joint d'étanchéité (7), interposé, assure une fonction d'étanchéité.

2. Interrupteur à bille selon la revendication 1,
**caractérisé en ce que**
la chambre (3) est ouverte vers le haut ou est couverte par une troisième plaque de matière plastique (12) formant la plaque de couvercle (12) pour enfermer la bille (17),
- cette plaque plane n'a pas de structure sur son côté tourné vers la chambre (3),
ou
- la plaque de couverture (12) comporte un second anneau d'étanchéité (13) concentrique à la chambre (3) comme pour la plaque de fond (6) et sur lequel s'appuie, de façon continue en périphérie, la collerette annulaire (5) à l'opposé de la plaque de chambre (9),
ou
- une plaque de couverture (12) à structure symétrique plan par rapport à la plaque de fond (6), est appliquée sur la plaque de chambre (9),
ou
- la chambre (3) est fermée par un disque circulaire avec interposition d'un joint d'étanchéité.

3. Interrupteur à bille selon la revendication 1 ou 2,
**caractérisé en ce que**
parallèlement à l'axe longitudinal (14) de la chambre sur le côté du premier chemin de contact (2) en partant du disque circulaire (1) et sur le côté de la paroi intérieure (11) de la chambre, il y a une surface de contact (15) électroconductrice, semi-tubulaire, continue, qui se termine au moins au niveau de la plaque de fond inférieure par une patte de soudage (16) pour le branchement vers l'extérieur de l'interrupteur à bille.

4. Interrupteur à bille selon la revendication 3,
**caractérisé en ce qu'**
au moins la surface extérieure exposée dans la chambre (3) et la surface extérieure de la bille, sont traitées avec une matière inerte vis-à-vis de l'atmosphère régnant dans la chambre.
